# EUROPEAN PATENT APPLICATION

(11) **EP 3 767 785 A1**
(43) Date of publication of application: **20.01.2021**
(21) Application number: 18907476.8
(22) Date of filing: 15.03.2018
(51) Int. Cl.: H02J 7/02, E02F 9/00, H02J 7/00

(54) **CONSTRUCTION MACHINERY**

(71) Applicant: Hitachi Construction Machinery Co., Ltd., Taito-ku, Tokyo 110-0015 (JP)
(72) Inventor: ISHIDA Seiji, Ibaraki 3000013 (JP); NAYA Itaru, Ibaraki 3000013 (JP)
(74) Representative: MERH-IP Matias Erny Reichl Hoffmann Patentanwälte PartG mbB
(86) International application number: PCT/JP2018/010235
(87) International publication number: WO 2019/176054

(57) **Abstract**

An electricity storage device (20) includes voltage detectors (25A) to (25C) detecting cell voltages (VcA) to (VcC) and a controller (26) controlling the cell voltages (VcA) to (VcC) . The controller (26) includes a balancing control section (27) performing balancing control reducing deviations of the cell voltages (VcA) to (VcC), a maximum cell voltage calculating section (28) calculating a maximum cell voltage (Vmax) in the cell voltages (VcA) to (VcC), a minimum cell voltage calculating section (29) calculating a minimum cell voltage (Vmin) in the cell voltages (VcA) to (VcC), and an abnormality detecting section (34) detecting an abnormality of the electricity storage device (20) in accordance with whether or not a differential voltage (ΔV) between the maximum cell voltage (Vmax) and the minimum cell voltage (Vmin) is within a range of a reference differential voltage (ΔVstd1) calculated based on a history of the balancing control performed.

## Description

### TECHNICAL FIELD

The present invention relates to a construction machine including an electricity storage device constituted by a plurality of cells.

### BACKGROUND ART

An electricity storage device mounted on a construction machine generally includes a plurality of cells connected in series with each other. In operation, such an electricity storage device generates a difference in voltage of each cell due to the resulting deviation of cell characteristics. At this time, each cell needs using within a range between an upper limit voltage and a lower limit voltage. Thus, those of a plurality of cells which reach a maximum cell voltage can be used within a limited range of not more than an upper limit voltage. Likewise, those of a plurality of cells which reach a minimum cell voltage can be used within a limited range of not less than a lower limit voltage. As described above, performance of an electricity storage device is restricted when a cell voltage deviates.

In response, Patent Document 1 discloses a technique for allowing cells which is operated at high voltages to discharge by providing a discharging circuit on each cell. As a result, balancing control reducing a difference between a maximum cell voltage and a minimum cell voltage is performed. Patent Document 2 discloses a technique for detecting a cell abnormality when a difference between a maximum cell voltage and a minimum cell voltage exceeds a reference value.

### PRIOR ART DOCUMENT

### PATENT DOCUMENT

Patent Document 1: Japanese Patent Laid-Open No. 2011-205803 A
Patent Document 2: Japanese Patent Laid-Open No. 2010-035337 A

### SUMMARY OF THE INVENTION

In fact, balancing control is performed as a construction machine is operated. Thus, an electricity storage device mounted on a construction machine is unlikely to perform balancing control for a long time, for example, in long-distance transportation. On the other hand, a difference in discharge characteristics for each cell is generated based on deviations of characteristics thereof. Consequently, a difference between a maximum cell voltage and a minimum cell voltage increases and reaches a predetermined abnormality detection level as time elapses even if each cell is normal.

The present invention was made in view of the aforementioned problems of the prior art and has an object to provide a construction machine capable of precisely detecting a cell abnormality, and suppressing false detection of abnormality even in a case where balancing control is not performed for a long time.

In order to solve the aforementioned problems, the present invention provides a construction machine including: an electricity storage device constituted by a plurality of cells connected in series with each other; an electric motor driven by power of the electricity storage device; a hydraulic pump driven by the electric motor; a working mechanism driven by hydraulic oil delivered by the hydraulic pump; a voltage detector detecting each cell voltage for the plurality of cells; and a controller controlling the cell voltage, characterized in that: the controller comprises: a balancing control section performing balancing control reducing deviations of the cell voltages of the plurality of cells; a maximum cell voltage calculating section calculating a maximum cell voltage in each of the cell voltages of the plurality of cells; a minimum cell voltage calculating section calculating a minimum cell voltage in each of the cell voltages of the plurality of cells; and an abnormality detecting section detecting an abnormality of the electricity storage device in accordance with whether or not a differential voltage between the maximum cell voltage and the minimum cell voltage is within a range of a reference differential voltage calculated based on a history of the balancing control performed.

According to the present invention, a cell abnormality can precisely be detected, and false detection of abnormality can be suppressed even in a case where balancing control is not performed for a long time.

### BRIEF DESCRIPTION OF THE DRAWINGS

Fig. 1 is a front view showing a hybrid-type hydraulic excavator according to the embodiment of the present invention.
Fig. 2 is a block diagram of a drive system of the hybrid-type hydraulic excavator in Fig. 1.
Fig. 3 is a block diagram showing a configuration of an electricity storage device in Fig. 2.
Fig. 4 is a characteristic diagram of one example of the relationship between the rest time and the cell voltage.
Fig. 5 is a characteristic diagram of one example of the relationship between the rest time and the reference differential voltage.
Fig. 6 is time charts of the time variations of a key switch, a differential voltage, balancing control, a relay, and a protection signal when all the cells are normally operated.
Fig. 7 is time charts of the time variations of the key switch, the differential voltage, the balancing control, the relay, and the protection signal when part of the cells is abnormally operated.
Fig. 8 is a block diagram of a drive system of an electrically-operated hydraulic excavator as a modification.

### MODE FOR CARRYING OUT THE INVENTION

Hereinafter, a hybrid-type hydraulic excavator will be described in detail as an example of a construction machine according to the embodiment of the present invention by referring to the attached drawings.

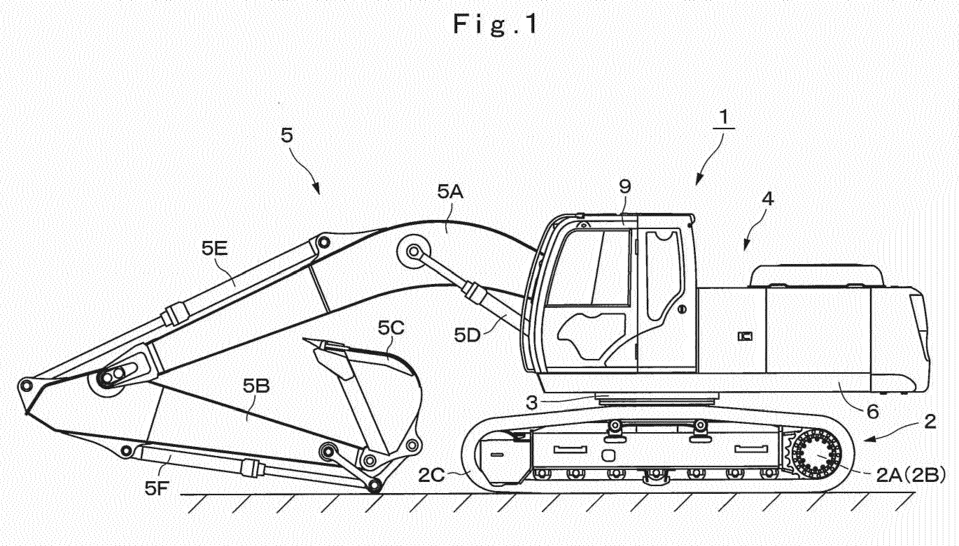

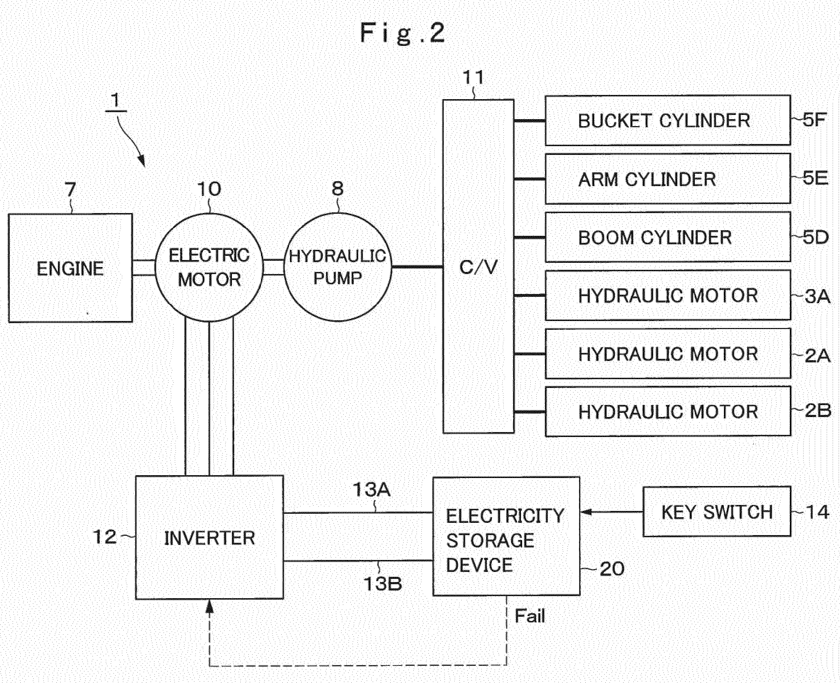

Figs. 1 and 2 illustrate a hybrid-type hydraulic excavator 1 according to the embodiment. As illustrated in Fig. 1, the hydraulic excavator 1 includes an automotive crawler-type lower traveling structure 2, an upper revolving structure 4 rotatably mounted on the lower traveling structure 2 through a revolving device 3, and a working mechanism 5 of an articulated structure provided on a front side of the upper revolving structure 4 and performing excavating operation and the like. The lower traveling structure 2 and the upper revolving structure 4 constitute a vehicle body of the hydraulic excavator 1. The lower traveling structure 2 includes hydraulic motors 2A, 2B for performing traveling operation. The hydraulic motor 2A is provided on the left side of the lower traveling structure 2. The hydraulic motor 2B is provided on the right side of the lower traveling structure 2. The revolving device 3 includes a hydraulic motor 3A for performing revolving operation. The lower traveling structure 2 is a crawler type illustrated herein, but may be a wheel type.

The working mechanism 5 corresponds to a front actuator mechanism. The working mechanism 5 is configured by a boom 5A, an arm 5B, a bucket 5C, and a boom cylinder 5D, an arm cylinder 5E, and a bucket cylinder 5F driving the boom 5A, the arm 5B, and the bucket 5C. The working mechanism 5 is mounted on a revolving frame 6 of the upper revolving structure 4. The working mechanism 5 is driven by hydraulic oil delivered by a hydraulic pump 8.

The upper revolving structure 4 includes an engine 7 as an internal combustion engine such as a diesel engine and the hydraulic pump 8 (main pump) driven by the engine 7. An electric motor 10 is mechanically connected to the engine 7. Thus, the hydraulic pump 8 is also driven by the electric motor 10. The hydraulic pump 8 delivers hydraulic oil. The lower traveling structure 2, the upper revolving structure 4, and the working mechanism 5 are independently operated by the hydraulic oil.

Specifically, the lower traveling structure 2 drives a pair of crawlers 2C (only one side is shown in Fig. 1) for traveling by allowing the hydraulic pump 8 to deliver the hydraulic oil into the traveling hydraulic motors 2A, 2B. The upper revolving structure 4 drives/revolves by allowing the hydraulic pump 8 to deliver the hydraulic oil into a revolving hydraulic motor 3A. The cylinders 5D to 5F extend or contract by the hydraulic oil delivered from the hydraulic pump 8. As a result, the working mechanism 5 performs lifting operation, excavation, ground levelling, and the like. The upper revolving structure 4 includes a cab 9. An operator rides on the cab 9 to operate the hydraulic excavator 1.

Subsequently, a drive system of the hydraulic excavator 1 will be described by referring to Fig. 2.

In Fig. 2, the electric motor 10 is mechanically connected to the engine 7. The electric motor 10 and the engine 7 drive the hydraulic pump 8 as a hydraulic pressure generator. Hydraulic oil delivered from the hydraulic pump 8 is distributed by a control valve 11 in accordance with the operation by an operator. As a result, the boom cylinder 5D, the arm cylinder 5E, the bucket cylinder 5F, traveling hydraulic motors 2A, 2B, and a revolving hydraulic motor 3A are driven by the hydraulic oil delivered from the hydraulic pump 8. The electric motor 10 plays two roles: power generation as a power generator using the engine 7 as a power source to supply power to the electricity storage device 20 and power running as a motor using the power from the electricity storage device 20 as power source to assist in driving the engine 7 and the hydraulic pump 8. Therefore, the electric motor 10 is driven by a power of the electricity storage device 20 when the electric motor 10 is driven as a motor.

The electric motor 10 is connected to a pair of DC buses 13A, 13B (DC cable) on positive and negative terminal sides through an inverter 12 as a power converter. The inverter 12 is configured by, for example, a plurality of switching devices such as a transistor and an insulating gate bipolar transistor (IGBT) . In the inverter 12, on and off operation of each of switching elements are controlled by a control section (not shown).

The inverter 12 converts the AC power from the electric motor 10 into the DC power to supply power into the electricity storage device 20 at the power generation of the electric motor 10. The inverter 12 converts the DC power in the DC buses 13A, 13B into the AC power to supply power to the electric motor 10 at the power running of the electric motor 10.

The electricity storage device 20 supplies power to the inverter 12 through the DC buses 13A, 13B constituted by a pair of DC cables. The inverter 12 drives the electric motor 10 by power supplied from the electricity storage device 20. Power from the electric motor 10 is supplied into the electricity storage device 20 through the inverter 12 at the power generation of the electric motor 10. As a result, the electricity storage device 20 will be charged. The electricity storage device 20 stops operation of the inverter 12 by issuing a protection signal Fail when abnormality is detected inside. As a result, the system is protected.

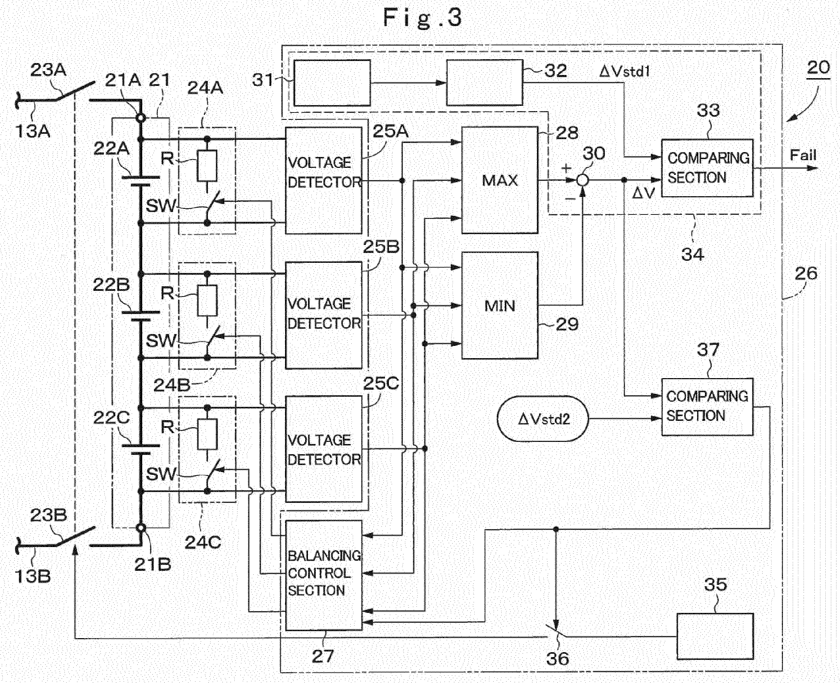

Subsequently, the electricity storage device 20 will be described by referring to Fig. 3. Herein, a case where an electricity storage device 20 includes three cells 22A to 22C will be below described in order to provide a simplified description. It should be noted that the number of cells is not limited to 3, and may be 2, or 4 or more.

Fig. 3 illustrates a configuration of the electricity storage device 20. The electricity storage device 20 is configured by a plurality of cells 22A to 22C connected in series with each other. Specifically, the electricity storage device 20 includes a storage battery 21 constituted by, for example, a lithium ion secondary battery. The storage battery 21 is a battery pack in which three cells 22A to 22C are connected in series with each other. A terminal 21A on the positive terminal side of the storage battery 21 is connected to the DC bus 13A on the positive terminal side through a relay 23A. A terminal 21B on the negative terminal side of the storage battery 21 is connected to the DC bus 13B on the negative terminal side through a relay 23B. At this time, the relays 23A, 23B constitute a shut-off device shutting off power supply from the electricity storage device 20 to the electric motor 10.

A discharging circuit 24A is connected to the cell 22A in parallel. The discharging circuit 24A includes a switch SW and a discharge resistance R connected in series with each other. The switch SW of the discharging circuit 24A is normally OFF (open-circuit). The discharging circuit 24A turns ON the switch SW (close-circuit) based on a command from a balancing control section 27. As a result, the discharging circuit 24A passes an electric current through the discharge resistance R to discharge the cell 22A. A voltage detector 25A is connected to the cell 22A. The voltage detector 25A measures the cell voltage VcA acting on both ends of the cell 22A.

Similarly to the cell 22A, discharging circuits 24B, 24C and voltage detectors 25B, 25C are connected to cells 22B, 22C. The discharging circuits 24B, 24C each include the switch SW and the discharge resistance R.

A controller 26 (battery controller) controls cell voltages VcA to VcC. The controller 26 is constituted by, for example, a microcomputer. The controller 26 includes the balancing control section 27, a maximum cell voltage calculating section 28, a minimum cell voltage calculating section 29, and an abnormality detecting section 34.

The balancing control section 27 discharges cells at high cell voltages based on each of the cell voltages VcA to VcC detected at the voltage detectors 25A to 25C to control the discharging circuits 24A to 24C so as to equalize the cell voltages . Specifically, the balancing control section 27 performs balancing control when a differential voltage ΔV between a maximum cell voltage Vmax in the cell voltages VcA to VcC and a minimum cell voltage Vmin in the cell voltages VcA to VcC exceeds a predetermined threshold voltage Vt in the state where a key switch 14 starting the hydraulic excavator 1 is ON. As a result, the differential voltage ΔV is suppressed to the threshold voltage Vt or less. On the other hand, the balancing control section 27 stops the balancing control in the state where the key switch 14 is OFF.

The input side of the maximum cell voltage calculating section 28 is connected to the voltage detectors 25A to 25C. The maximum cell voltage calculating section 28 calculates the maximum cell voltage Vmax as a maximum value of a cell voltage in the cell voltages VcA to VcC detected at the voltage detectors 25A to 25C, respectively. The maximum cell voltage calculating section 28 outputs the maximum cell voltage Vmax.

The input side of the minimum cell voltage calculating section 29 is connected to the voltage detectors 25A to 25C. The minimum cell voltage calculating section 29 calculates the minimum cell voltage Vmin as a minimum value of a cell voltage in the cell voltages VcA to VcC detected at the voltage detectors 25A to 25C, respectively. The minimum cell voltage calculating section 29 outputs the minimum cell voltage Vmin.

An input side of the subtraction section 30 is connected to the maximum cell voltage calculating section 28 and the minimum cell voltage calculating section 29. The subtraction section 30 subtracts the minimum cell voltage Vmin from the maximum cell voltage Vmax to calculate the differential voltage ΔV. The subtraction section 30 outputs the differential voltage ΔV.

A rest time measuring section 31 detects a rest time Trest during which neither the hydraulic excavator 1 has started nor the balancing control section 27 has been operated. The rest time measuring section 31 outputs the rest time Trest. The rest time Trest is detected using for example, time information in a satellite positioning system detecting the position of the hydraulic excavator 1. Specifically, the time information in the satellite positioning system is stored when the hydraulic excavator 1 is stopped. The rest time Trest is calculated by comparing time information at stop and start of the hydraulic excavator 1. The rest time Trest corresponds to a period during which balancing control is not performed, or history information of the balancing control performed. The rest time measuring section 31 may measure the time during which the key switch 14 is OFF using a timer in the controller 26, and detect the time as the rest time Trest.

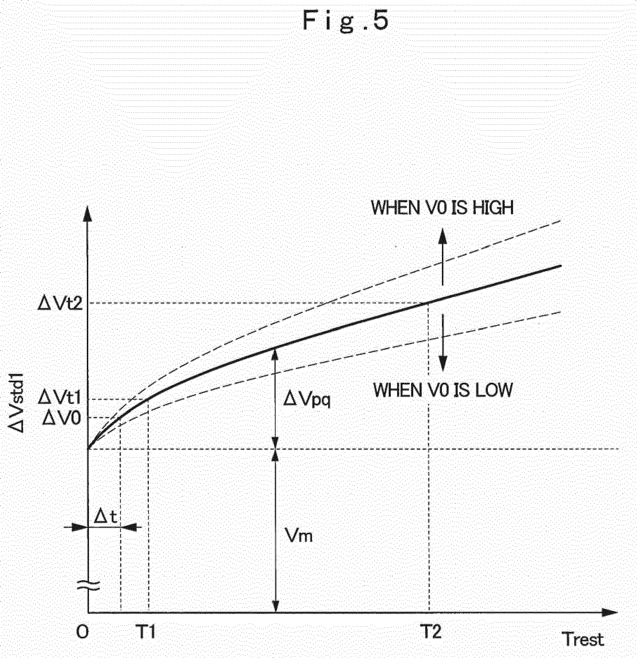

An input side of a reference differential voltage calculating section 32 is connected to the rest time measuring section 31. The reference differential voltage calculating section 32 calculates a reference differential voltage ΔVstd1 based on the rest time Trest. Fig. 5 illustrates a relationship between the rest time Trest and the reference differential voltage ΔVstd1. The reference differential voltage ΔVstd1 increases as the rest time Trest increases. The reference differential voltage ΔVstd1 is determined based on the time variation of a normal cell voltage with respect to the rest time Trest.

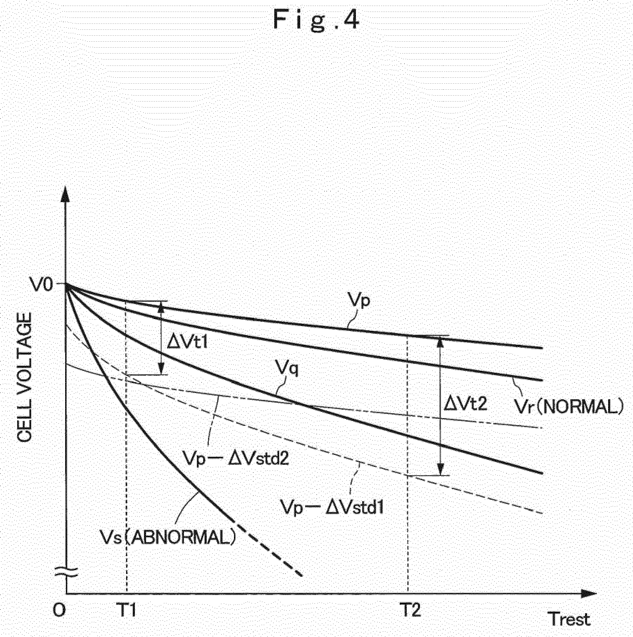

A method for determining the reference differential voltage ΔVstd1 will be below described in detail. Fig. 4 illustrates cell voltages Vp, Vq as an example of time variations of the cell voltages VcA, VcB with respect to the rest time Trest. It is assumed that the cell voltage Vp is a cell voltage of a normal cell having the smallest amount of drop in voltage. It is also assumed that the cell voltage Vq is a cell voltage of a normal cell having the largest amount of drop in voltage. The cell voltages Vp, Vq are determined experimentally using, for example, sample cells.

As illustrated in Fig. 5, the reference differential voltage ΔVstd1 is determined by adding a predetermined margin Vm to a differential voltage ΔVpq between a cell voltage Vp and a cell voltage Vq. The margin Vm is determined experimentally in view of, for example, measurement errors and characteristic deviations of cell voltages and the like.

The reference differential voltage ΔVstd1 increases as the rest time Trest increases. Therefore, a comparison of a reference differential voltage ΔVt1 (ΔVt1=ΔVstd2 (T1)) when the rest time Trest is a short time T1 and a reference differential voltage ΔVt2 (ΔVt1=ΔVstd2 (T2)) when the rest time Trest is a long time T2 (T2>T1) finds that the reference differential voltage ΔVt2 is a larger value.

The reference differential voltage calculating section 32 has a map showing a relationship between the reference differential voltage ΔVt2 and the rest time Trest illustrated in Fig. 5, stored in, for example, a memory (not shown) of the controller 26. The reference differential voltage calculating section 32 calculates the reference differential voltage ΔVstd1 from the rest time Trest using the map. The reference differential voltage calculating section 32 may calculate the reference differential voltage ΔVstd1 from the rest time Trest using not only a map, but also an approximation formula in accordance with the characteristic lines illustrated in Fig. 5.

The differential voltage ΔV and the reference differential voltage ΔVstd1 are input to a comparing section 33 for determining an abnormality. The comparing section 33 compares the differential voltage ΔV and the reference differential voltage ΔVstd1. The comparing section 33 issues the protection signal Fail (the protection signal Fail is turned ON) in a case where the differential voltage ΔV is higher than the reference differential voltage ΔVstd1. On the other hand, the comparing section 33 does not issue the protection signal Fail (the protection signal Fail is turned OFF) in a case where the differential voltage ΔV is lower than the reference differential voltage ΔVstd1. The comparing section 33 outputs the protection signal Fail to the inverter 12.

The abnormality detecting section 34 detects an abnormality of the electricity storage device 20 in accordance with whether or not the differential voltage ΔV between the maximum cell voltage Vmax and the minimum cell voltage Vmin is within a range of the reference differential voltage ΔVstd1 calculated based on a history of the balancing control performed. The abnormality detecting section 34 includes the subtraction section 30, the rest time measuring section 31, the reference differential voltage calculating section 32, and the comparing section 33.

A relay-on control section 35 controls the relays 23A, 23B to turn ON (close-circuit) and OFF (open-circuit) through a switch 36. The relay-on control section 35 turns ON the relays 23A, 23B when the hydraulic excavator 1 starts, and turns OFF the relays 23A, 23B when the hydraulic excavator 1 stops.

The differential voltage ΔV and a tolerance voltage ΔVstd2 are input to a comparing section 37 for determining a shut-off. The comparing section 37 compares the differential voltage ΔV and the tolerance voltage ΔVstd2. The comparing section 37 operates the switch 36 and turns OFF the relays 23A, 23B in a case where the differential voltage ΔV is higher than the tolerance voltage ΔVstd2. As a result, power supply from the electricity storage device 20 is shut off. On the other hand, the comparing section 37 operates the switch 36 and turns ON the relays 23A, 23B in a case where the differential voltage ΔV is lower than the tolerance voltage ΔVstd2. As a result, power supply from the electricity storage device 20 is permitted. The comparing section 37 outputs a comparative result of the differential voltage ΔV and the tolerance voltage ΔVstd2 to the balancing control section 27. As a result, the balancing control section 27 performs balancing control in a case where the differential voltage ΔV is higher than the tolerance voltage ΔVstd2.

Subsequently, the operation of balancing control of the electricity storage device 20 according to this embodiment will be described by referring to Figs. 4 to 7.

Fig. 4 illustrates cell voltages Vp, Vq, Vr as an example of time variations of the three cell voltages VcA, VcB, VcC with respect to the rest time Trest. The cell voltage Vp in Fig. 4 corresponds to a cell voltage of a normal cell having the smallest internal discharge current in the electricity storage device 20 and the smallest amount of drop in voltage. The cell voltage Vq corresponds to a cell voltage of a normal cell having the largest internal discharge current in the electricity storage device 20 and the largest amount of drop in voltage. On the other hand, the cell voltage Vr corresponds to a cell voltage of a normal cell as a value within a range of the cell voltage Vp or less and the cell voltage Vq or more. As described above, the cell voltages Vp to Vr are values within a range of the cell voltage Vp or less and the cell voltage Vq or more in a case where all of the cells 22A to 22C are normal.

On the other hand, the cell voltage Vs is one example of cell voltage of a cell which generates an abnormality therein and an excessive internal discharge current. The cell voltage Vs in an abnormal cell is not within a range between the cell voltage Vp and the cell voltage Vq, and a value lower than the cell voltage Vq in a case where for example, any one of the cells 22A to 22C is abnormal.

A case where the cells 22A, 22B are normal and the cell 22C is abnormal in the cells 22A to 22C in the electricity storage device 20 will be first described. Specifically, a case where cell voltages Vp, Vq, Vs are detected from the cell 22A to 22C, respectively, will be described (see Fig. 4).

In this case, the maximum cell voltage Vmax output by the maximum cell voltage calculating section 28 corresponds to the cell voltage Vp of the cell 22A. On the other hand, the minimum cell voltage Vmin output by the minimum cell voltage calculating section 29 corresponds to the cell voltage Vs of the cell 22C.

The differential voltage ΔV (ΔV=Vp-Vs) as a difference between the cell voltage Vp and the cell voltage Vs exceeds the reference differential voltage ΔVt1 at time T1 calculated by the reference differential voltage calculating section 32 (see Fig. 5) in a case where the system starts at time T1. Thus, the comparing section 33 issues the protection signal Fail (turns ON the protection signal Fail).

The comparing section 33 performs calculations based on the differential voltage ΔV as a difference between the cell voltage Vp and the cell voltage Vs even in a case where the system starts at time T2. At this time, the differential voltage ΔV exceeds the reference differential voltage ΔVt2 at time T2 illustrated in Fig. 5. Thus, the comparing section 33 issues the protection signal Fail. As described above, the differential voltage ΔV exceeds reference differential voltages ΔVt1, ΔVt2 even if the system starts at any one of times T1, T2. Thus, the comparing section 33 issues the protection signal Fail and protects the system normally regardless of the system's start time.

A normal cell voltage may be a voltage within a range of the cell voltage Vp or less and the cell voltage Vq or more. Therefore, the maximum cell voltage Vmax may be the cell voltage Vq in a case where for example, the cell voltages of all the normal cells are lowered in the vicinity of the cell voltage Vq.

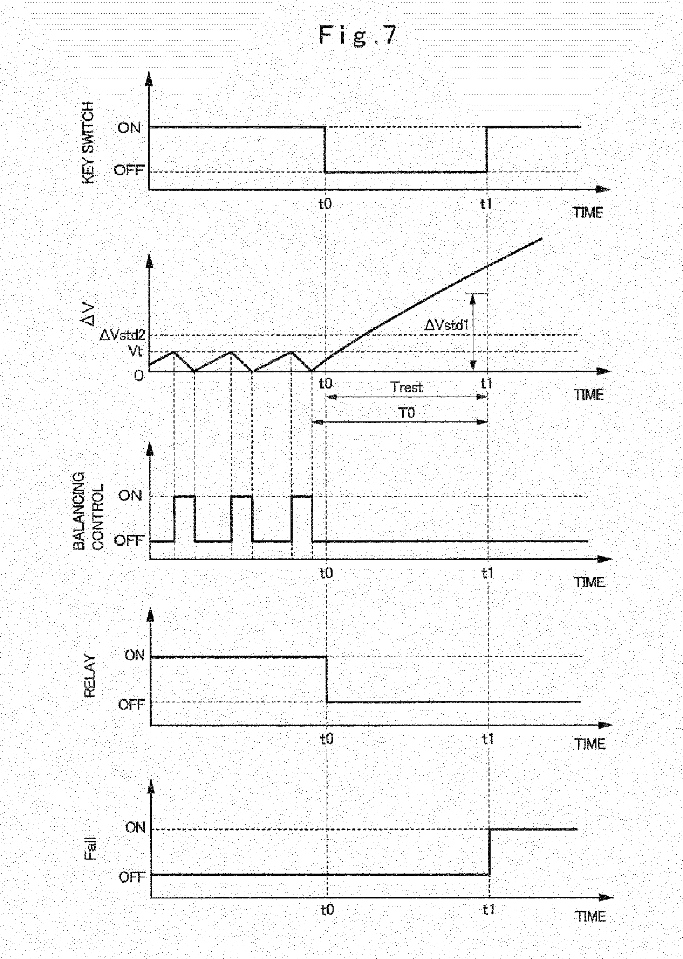

Fig. 7 illustrates time charts of the key switch 14, the differential voltage ΔV, balancing control, the relays 23A, 23B, and the protection signal Fail in a case where the cell 22C is abnormal. As illustrated in Fig. 7, the hydraulic excavator 1 will stop (time is T0) when the key switch 14 is switched from ON to OFF. At this time, the rest time measuring section 31 stores time information at the time of stop. The relays 23A, 23B are switched from ON to OFF.

Thereafter, the hydraulic excavator 1 will start (time is T1) when the key switch 14 is switched from OFF to ON. At this time, the rest time measuring section 31 acquires time information at the time of start. The rest time measuring section 31 measures the rest time Trest during which the key switch 14 is OFF by a time difference between time information at the time of start and stop. At this time, the reference differential voltage calculating section 32 calculates the reference differential voltage ΔVstd1 based on the rest time Trest. The subtraction section 30 calculates the differential voltage ΔV between the cell voltage Vp as the maximum cell voltage Vmax and the cell voltage Vs as the minimum cell voltage Vmin.

As a result, the comparing section 33 compares the differential voltage ΔV and the reference differential voltage ΔVstd1. The differential voltage ΔV exceeds the reference differential voltage ΔVstd1 at time T1 when the key switch 14 is switched from OFF to ON, and further increases. Thus, the relays 23A, 23B are held at OFF. On the other hand, the protection signal Fail is switched from OFF to ON. As a result, the protection signal Fail is issued to the inverter 12 to hold the inverter 12 in the state of stop. As a result, the system will be protected.

Subsequently, a case where all the cells 22A to 22C in the electricity storage device 20 are normal will be described. Specifically, a case where cell voltages Vp, Vq, Vr are detected from the cells 22A to 22C, respectively, will be described (see Fig. 4). At this time, the cell voltage Vr of the cell 22C is a cell voltage of a normal cell within a range of the cell voltage Vp or less and the cell voltage Vq or more.

The comparing section 33 performs calculations based on the differential voltage ΔV (ΔV=Vp-Vq) as a difference between the cell voltage Vp and the cell voltage Vq in a case where the system starts at, for example, time T1. At this time, the differential voltage ΔV does not exceed the reference differential voltage ΔVt1 (ΔVt1=ΔVstd2 (T1)) at time T1 (see Fig. 5). Thus, the comparing section 33 does not issue the protection signal Fail (the protection signal Fail is turned OFF).

The comparing section 33 performs calculations based on the differential voltage ΔV as a difference between the cell voltage Vp and the cell voltage Vq in a case where the system starts at time T2. At this time, the differential voltage ΔV does not exceed the reference differential voltage ΔVt2 (ΔVt2=ΔVstd2 (T2)) at time T2 illustrated in Fig. 5. Thus, the comparing section 33 does not issue the protection signal Fail. As described above, the differential voltage ΔV does not exceed the reference differential voltages ΔVt1, ΔVt2 even if the system starts at any one of times T1, T2. Thus, the comparing section 33 does not issue the protection signal Fail regardless of the system's start time.

As described above, it is possible to detect a cell abnormality at time T1 when the rest time Trest is short by calculating the reference differential voltage ΔVstd1 based on the rest time Trest as history information of balancing control performed. In addition, a false alarm of the protection signal Fail can be suppressed without determining a normal cell as an abnormal cell mistakenly at time T2 when the rest time Trest is long.

The cell voltage is limited by a cell having a maximum voltage when the cell voltage increases at the time of charging, and limited by a cell having a minimum voltage when the cell voltage decreases at the time of discharging in a case where the rest time Trest is long and the differential voltage ΔV is high. In this case, sufficient system performance cannot be provided.

Thus, only balancing control is performed in the state where the relays 23A, 23B are opened (OFF) to stop power supply from the electricity storage device 20 when the differential voltage ΔV exceeds a tolerance voltage Vstd2. The balancing control reduces the differential voltage ΔV to turn the differential voltage ΔV into the tolerance voltage ΔVstd2 or less (time T2). As a result, sufficient system performance can be provided, thereby making the relays 23A, 23B close-circuit (ON) . Consequently, a normal system can be started.

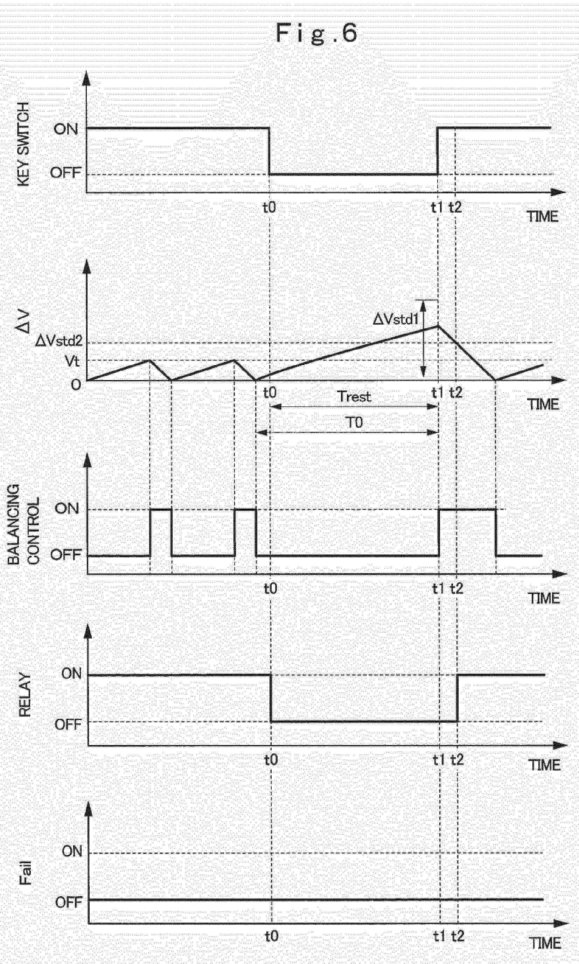

Fig. 6 illustrates time charts of the key switch 14, the differential voltage ΔV, balancing control, the relays 23A, 23B, the protection signal Fail in a case where all of the cells 22A to 22C are normal. As illustrated in Fig. 6, the hydraulic excavator 1 stops (time t0) when the key switch 14 is switched from ON to OFF. At this time, the rest time measuring section 31 stores time information at the time of stop. The relays 23A, 23B are switched from ON to OFF.

Thereafter, the hydraulic excavator 1 starts (time T1) when the key switch 14 is switched from OFF to ON. At this time, the rest time measuring section 31 acquires time information at the time of start. The rest time measuring section 31 measures the rest time Trest during which the key switch 14 is OFF by a time difference between time information at the time of start and stop. At this time, the reference differential voltage calculating section 32 calculates the reference differential voltage ΔVstd1 based on the rest time Trest. The subtraction section 30 calculates the differential voltage ΔV between a cell voltage VcA as the maximum cell voltage Vmax and a cell voltage VcB as the minimum cell voltage Vmin.

As a result, the comparing section 33 compares the differential voltage ΔV and the reference differential voltage ΔVstd1. The differential voltage ΔV exceeds the tolerance voltage ΔVstd2 at time T1 when the key switch 14 is switched from OFF to ON. Thus, the relays 23A, 23B are held at OFF. On the other hand, the differential voltage ΔV is lower than the reference differential voltage ΔVstd1 at time T1. Thus, the protection signal Fail is held at OFF. On the contrary, the balancing control section 27 performs balancing control. As a result, the differential voltage ΔV decreases to the tolerance voltage ΔVstd2 or less (time T2). At time T2, the relays 23A, 23B are switched from OFF to ON. As a result, the normal system can be started.

As described above, according to the embodiment, the controller 26 includes the balancing control section 27 performing balancing control reducing deviations of the cell voltages VcA to VcC of a plurality of cells 22A to 22C, the maximum cell voltage calculating section 28 calculating the maximum cell voltage Vmax in the cell voltages VcA to VcC of the plurality of cells 22A to 22C, the minimum cell voltage calculating section 29 calculating the minimum cell voltage Vmin in the cell voltages VcA to VcC of the plurality of cells 22A to 22C, and the abnormality detecting section 34 detecting an abnormality of the electricity storage device 20 in accordance with whether or not the differential voltage ΔV between the maximum cell voltage Vmax and the minimum cell voltage Vmin is within a range of the reference differential voltage ΔVstd1 determined based on a history of the balancing control performed.

Thus, an abnormality of the electricity storage device 20 can be detected in view of increases in the differential voltage ΔV associated with the rest time Trest even if the differential voltage ΔV between the maximum cell voltage Vmax and the minimum cell voltage Vmin increases, for example, by long-term non-operation. Consequently, a cell abnormality can precisely be detected, and false detection of abnormality can be suppressed even if balancing control is not performed for a long time.

The hydraulic excavator 1 includes the relays 23A, 23B (shut-off device) shutting off power supply from the electricity storage device 20 to the electric motor 10, and the controller 26 shuts off power supply from the electricity storage device 20 to the electric motor 10 by the relays 23A, 23B when the differential voltage ΔV between the maximum cell voltage Vmax and the minimum cell voltage Vmin is not within a range of the tolerance voltage ΔVstd2.

Thus, power supply from the electricity storage device 20 to the electric motor 10 can be shut off when the differential voltage ΔV between the maximum cell voltage Vmax and the minimum cell voltage Vmin exceeds the tolerance voltage ΔVstd2 and fails to provide sufficient system performance.

The balancing control section 27 performs balancing control when power is supplied from the electricity storage device 20 to the electric motor 10 and also the relays 23A, 23B shut off power supply from the electricity storage device 20 to the electric motor 10.

Thus, balancing control can be performed in the state where power supply from the electricity storage device 20 to the electric motor 10 is shut off when, for example, the differential voltage ΔV between the maximum cell voltage Vmax and the minimum cell voltage Vmin exceeds the tolerance voltage ΔVstd2 and fails to provide sufficient system performance. Consequently, the differential voltage ΔV between the maximum cell voltage Vmax and the minimum cell voltage Vmin can be reduced to provide sufficient system performance.

The abnormality detecting section 34 includes the subtraction section 30 calculating the differential voltage ΔV between the maximum cell voltage Vmax and the minimum cell voltage Vmin, the rest time measuring section 31 measuring the rest time Trest during which the hydraulic excavator 1 stops as a history of the balancing control performed, the reference differential voltage calculating section 32 calculating the reference differential voltage ΔVstd1 based on the rest time Trest, and the comparing section 33 comparing the differential voltage ΔV and the reference differential voltage ΔVstd1.

At this time, the subtraction section 30 calculates the differential voltage ΔV by subtracting the minimum cell voltage Vmin from the maximum cell voltage Vmax. On the other hand, the reference differential voltage calculating section 32 calculates the reference differential voltage ΔVstd1 based on the rest time Trest measured by the rest time measuring section 31. As a result, the comparing section 33 compares the differential voltage ΔV and the reference differential voltage ΔVstd1 to determine whether or not the differential voltage ΔV is within the reference differential voltage ΔVstd1. Consequently, the controller 26 can determine that the electricity storage device 20 is normal when the differential voltage ΔV is within the reference differential voltage ΔVstd1. On the other hand, the controller 26 can determine that the electricity storage device 20 is abnormal when the differential voltage ΔV is not within a range of the reference differential voltage ΔVstd1.

The reference differential voltage calculating section 32 calculates the reference differential voltage ΔVstd1 based on increases in a differential voltage (for example, the differential voltage ΔVpq) between a cell voltage of a normal cell having the smallest amount of drop in voltage and a cell voltage of a normal cell having the largest amount of drop in voltage in accordance with an elapsed time after completion of the balancing control.

Thus, the differential voltage ΔV between the maximum cell voltage Vmax and the minimum cell voltage Vmin exceeds the reference differential voltage ΔVstd1 in a short time after completion of the balancing control when there exists an abnormal cell having excessive amount of drop in voltage (for example, a cell 21C). Consequently, the abnormality detecting section 34 can detect an abnormality of the electricity storage device 20 even if an elapsed time is shorter after completion of the balancing control than a case where the differential voltage ΔV is compared with a constant reference value.

In the aforementioned embodiment, a case where the electricity storage device 20 includes a single series circuit having cells 22A to 22C connected in series was exemplified. The present invention is not limited to that, and for example, an electricity storage device may include a plurality of series circuit having a plurality of cells connected in series, and the series circuit may be connected in parallel.

The state of the comparing section 33 for determining an abnormality and the state of the comparing section 37 for determining a shut-off may be displayed for an operator. In this case, the operator can confirm whether a cell abnormality is generated, or balancing control is required just because of a long rest time Trest. As a result, the operator can acquire information required for taking appropriate measures.

In the aforementioned embodiment, a case where the reference differential voltage calculating section 32 calculates the reference differential voltage ΔVstd1 only based on the rest time Trest was exemplified. The present invention is not limited to that, and the reference differential voltage calculating section 32 may calculate the reference differential voltage ΔVstd1 in view of a differential voltage ΔV0 at the time of system stop (at the time of start of non-operation) in addition to the rest time Trest.

Specifically, correction may be made so as to increase the reference differential voltage ΔVstd1 in a case where a differential voltage ΔV0 is high at the time of system stop. That is, an initial differential voltage ΔV0 can be generated at the time of system stop when non-operation starts. In this case, as illustrated in Fig. 5, the state is the same as a case where the differential voltage ΔV increase to an initial differential voltage ΔV0 as a time difference Δt elapses in comparison with the start of non-operation from a state where the differential voltage ΔV is 0 (ΔV=0). Thus, the reference differential voltage ΔVstd1 can be calculated by calculating the time difference Δt in accordance with an initial differential voltage ΔV0 and adding the time difference Δt to the rest time Trest. As a result, a false alarm of the protection signal Fail can be suppressed more precisely.

The differential voltage ΔV between the maximum cell voltage Vmax and the minimum cell voltage Vmin varies according to an initial voltage V0 where the differential voltage ΔV is 0 (ΔV=0). That is, a time variation of the differential voltage ΔV tends to be large when the initial voltage V0 is high. A time variation of the differential voltage ΔV tends to be small when the initial voltage V0 is low.

Thus, the reference differential voltage ΔVstd1 may change based on the initial voltage V0. Specifically, a cell voltage is detected beforehand as the initial voltage V0, for example, when the last balancing control is completed, or non-operation starts. As illustrated in Fig. 5 (broken lines), a time variation of the reference differential voltage ΔVstd1 is increased when the initial voltage V0 is high. A time variation of the reference differential voltage ΔVstd1 is reduced when the initial voltage V0 is low.

In the aforementioned embodiment, balancing control is continuously performed as the hydraulic excavator 1 is driven. Thus, the differential voltage ΔV between the maximum cell voltage Vmax and the minimum cell voltage Vmin is a small value (for example, a value in the vicinity of 0) as the hydraulic excavator 1 is driven. In view of this observation, the reference differential voltage calculating section 32 according to the embodiment is configured to calculate the reference differential voltage ΔVstd1 based on the rest time Trest of the hydraulic excavator 1 as a history of the balancing control performed. The present invention is not limited to that, and for example, the reference differential voltage calculating section 32 may calculate the reference differential voltage ΔVstd1 based on an elapsed time T0 (see Figs. 6 and 7) from the time of completion of the last balancing control in place of the rest time Trest as a history of the balancing control performed.

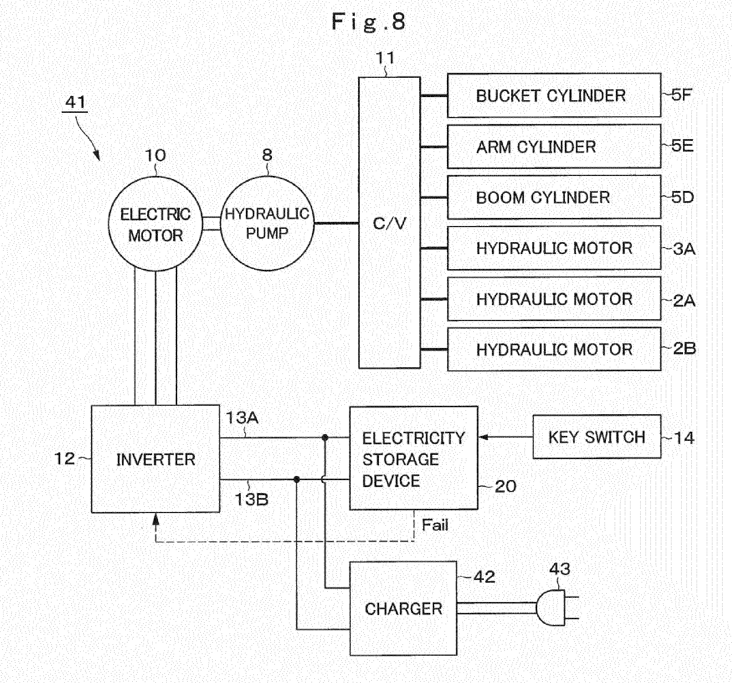

In the aforementioned embodiment, a case where the hybrid-type hydraulic excavator 1 includes the engine 7, the electric motor 10, and the electricity storage device 20 was exemplified. The present invention is not limited to that, and may be applied to an electrically-operated hydraulic excavator 41 as in a modification illustrated in Fig. 8. In this case, the hydraulic excavator 41 includes a charger 42 for externally charging the electricity storage device 20, while an engine is omitted. The charger 42 is connected to the DC buses 13A, 13B. The charger 42 has, for example, an external power source connecting terminal 43 to be connected to an external power source such as a commercial power source. The charger 42 supplies power supplied from the external power source connecting terminal 43 to the electricity storage device 20 to charge the electricity storage device 20.

In the aforementioned embodiment, the hydraulic excavator 1 was exemplified as a construction machine. The present invention is not limited to that, and may be a construction machine including an electricity storage device constituted by a plurality of cells, and can be applied to various construction machines such as a wheel loader.

### DESCRIPTION OF REFERENCE NUMERALS

1, 41: Hydraulic excavator (Construction machine)
5: Working mechanism
8: Hydraulic pump
10: Electric motor
20: Electricity storage device
22A to 22C: Cell
23A, 23B: Relay (Shut-off device)
24A to 24C: Discharging circuit
25A to 25C: Voltage detector
26: Controller
27: Balancing control section
28: Maximum cell voltage calculating section
29: Minimum cell voltage calculating section
30: Subtraction section
31: Rest time measuring section
32: Reference differential voltage calculating section
33, 37: Comparing section
34: Abnormality detecting section
35: Relay-on control section
36: Switch

## Claims

1. A construction machine comprising:
an electricity storage device constituted by a plurality of cells connected in series with each other;
an electric motor driven by power of the electricity storage device;
a hydraulic pump driven by the electric motor;
a working mechanism driven by hydraulic oil delivered by the hydraulic pump;
a voltage detector detecting each cell voltage for the plurality of cells; and
a controller controlling the cell voltage, **characterized in that**:
the controller comprises:
a balancing control section performing balancing control reducing deviations of the cell voltages of the plurality of cells;
a maximum cell voltage calculating section calculating a maximum cell voltage in each of the cell voltages of the plurality of cells;
a minimum cell voltage calculating section calculating a minimum cell voltage in each of the cell voltages of the plurality of cells; and
an abnormality detecting section detecting an abnormality of the electricity storage device in accordance with whether or not a differential voltage between the maximum cell voltage and the minimum cell voltage is within a range of a reference differential voltage calculated based on a history of the balancing control performed.

2. The construction machine according to claim 1, comprising a shut-off device shutting off power supply from the electricity storage device to the electric motor, wherein
the controller shuts off power supply from the electricity storage device to the electric motor by the shut-off device when a differential voltage between the maximum cell voltage and the minimum cell voltage is out of a range of a tolerance voltage.

3. The construction machine according to claim 2, wherein
the balancing control section performs the balancing control not only when power is supplied from the electricity storage device to the electric motor, but also when the shut-off device shuts off power supply from the electricity storage device to the electric motor.

4. The construction machine according to claim 1, wherein
the abnormality detecting section comprises a subtraction section calculating the differential voltage between the maximum cell voltage and the minimum cell voltage;
a rest time measuring section measuring a rest time during which the construction machine stops as a history of the balancing control performed;
a reference differential voltage calculating section calculating the reference differential voltage based on the rest time; and a comparing section comparing the differential voltage and the reference differential voltage.

5. The construction machine according to claim 4, wherein
the reference differential voltage calculating section calculates the reference differential voltage based on increases in a differential voltage between a cell voltage of a normal cell having the smallest amount of drop in voltage and a cell voltage of a normal cell having the largest amount of drop in voltage in accordance with an elapsed time after completion of the balancing control.
